# EUROPÄISCHE PATENTSCHRIFT

(11) **EP 2 110 575 B1**
(45) Veröffentlichungstag und Bekanntmachung des Hinweises auf die Patenterteilung: **17.10.2012**
(21) Anmeldenummer: 09005446.1
(22) Anmeldetag: 17.04.2009
(51) Int. Cl.: F16D 55/02, F16D 65/00

(54) **Scheibenbremse**
Disc brake
Frein à disque

(30) Priorität: 17.04.2008 DE 102008019267
(43) Veröffentlichungstag der Anmeldung: 21.10.2009
(73) Patentinhaber: KNORR-BREMSE Systeme für Nutzfahrzeuge GmbH, 80809 München (DE)
(72) Erfinder: Raffin, Christian, 85630 Grasbrunn (DE); Helf, Anton, 83139 Söchtenau (DE); Bauer, Matthias, 83308 Trostberg (DE); Riglsperger, Josef, 84367 Tann (DE); Peschel, Michael, 82296 Schöngeising (DE)
(74) Vertreter: Mattusch, Gundula

(56) Entgegenhaltungen:
- WO-A-2007/085439
- DE-A1- 19 652 123
- DE-B3- 10 347 115
- DE-B3-102005 034 868
- FR-A- 2 881 501

## Beschreibung

Die Erfindung betrifft eine Scheibenbremse nach dem Oberbegriff des Anspruchs 1, siehe DE-B-10 2005 034 868.

Um die im Aufnahmeraum des Bremssattels angeordneten funktionsrelevanten Bauteile, wie eine Zuspanneinrichtung, vor Korrosion durch Witterungseinflüsse zu schützen, ist dieser Aufnahmeraum weitgehend druckdicht verschlossen, wobei die dem zugeordneten Bremsbelag abgewandte Seite des Aufnahmeraums durch einen Deckel, in dem im Übrigen auch Transmissionselemente einer Nachstelleinrichtung positioniert sind, und auf der dem Bremsbelag zugewandten Seite durch eine Verschlussplatte verschlossen ist.

Die Stellspindeln, die mittels der Zuspanneinrichtung gegen den Bremsbelag drückbar sind, sind durch die Verschlussplatte geführt und hier jeweils mittels eines Faltenbalges abgedichtet, der luftdicht einerseits an der Stellspindel und andererseits an der Verschlussplatte befestigt ist.

Durch eine betriebsbedingte Erwärmung der im Aufnahmeraum befindlichen Luft ergeben sich ebenso wie bei Verstellvorgängen bei einer Wartung der Bremse im Aufnahmeraum Druckunterschiede gegenüber der Umgebung. Dies führt dazu, dass die Faltenbälge durch einen Überdruck aufgebläht und bei Unterdruck angesaugt, d.h., in den Aufnahmeraum eingezogen werden.

Bei einem Aufblähen in Richtung des Bremsbelages besteht die Gefahr, dass die Faltenbälge mit heißen Bauteilen der unmittelbaren Umgebung in Kontakt kommen und dadurch beschädigt werden. Diese Gefahr wird noch dadurch erhöht, dass die Faltenbälge durch das Aufblähen einer entsprechenden mechanischen Belastung unterliegen. Letztendlich kann es durch die genannten Beanspruchungen zu einem vorzeitigen Ausfall der Faltenbälge kommen, die ihrer eigentlichen Funktion dann nicht mehr nachkommen können, so dass es im weiteren Verlauf zu Beschädigungen der Bauteile im Aufnahmeraum kommt.

Neben der Innendruckerhöhung des Aufnahmeraumes durch Erwärmung kommt es bislang auch zu einer Innendruckerhöhung bei einem Bremsbelagwechsel. Hierbei werden die als Gewinderohre ausgebildeten Stellspindeln zurückgeschraubt, wobei sich das Volumen des Aufnahmeraums verringert, was zu einem Innendruckanstieg führt. Durch ein Einstecken neuer Bremsbeläge können die in einen Belagschacht zur Aufnahme des zugeordneten Bremsbelags ragenden Faltenbälge beschädigt werden.

In jedem Fall wird durch den Über- bzw. Unterdruck im Aufnahmeraum eine vorschriftsmäßige Faltung der Faltenbälge verhindert, so dass deren Standzeit, unabhängig von einer akuten Beschädigung, beeinträchtigt ist.

Bei den bekannten, im Einsatz befindlichen Scheibenbremsen werden die erwähnten Druckunterschiede, wenn überhaupt, nur über einen längeren Zeitraum ausgeglichen über eine Diffusion durch Elastomerteile, wie sie Bestandteil der Abdichtung des Aufnahmeraumes sind.

Aus der DE-B 103 47 115 ist eine Scheibenbremse für ein Schienenfahrzeug bekannt, deren Zuspannung über einen in einem Gehäuse positionierten elektromechanischen Bremsaktuator erfolgt. Das Innere des Gehäuses steht über einen Luftschlauch mit einem für Feuchtigkeit und Schmutz geschützten Bereich in Verbindung. Allerdings weist diese Scheibenbremse keinen Faltenbalg zur Abdichtung des Aufnahmeraumes auf.

Ein solcher Faltenbalg ist bei einer Scheibenbremse vorgesehen, wie sie aus der FR-A-2 881 501 bekannt ist. Die Befestigungselemente, mit denen der Bremssattel an dem Bremsträger in Zuspannrichtung beweglich angeschlossen ist, sind gegenüber dem Bremssattel ebenfalls durch Faltenbälge abgedichtet, die, um einen Druckausgleich bei einer Verschiebung des Bremssattels auf den Befestigungselementen, d.h. auf deren Führungsholmen, zu schaffen, mit einer gasdurchlässigen Membrane versehen sind.

Der Erfindung liegt die Aufgabe zugrunde, eine Scheibenbremse der gattungsgemäßen Art so weiterzuentwickeln, dass mit konstruktiv geringem Aufwand ihre Standzeit, insbesondere die der Faltenbälge, erhöht wird.

Diese Aufgabe wird durch eine Scheibenbremse mit den Merkmalen des Anspruchs 1 gelöst.

Durch den erfindungsgemäß vorgesehenen spritzwassergeschützten Luftdurchlass besteht dauerhaft ein Druckausgleich zwischen dem Aufnahmeraum und der Umgebung, also der Atmosphäre, so dass die Faltenbälge weder durch eine betriebsbedingte Erwärmung des Aufnahmeraums, noch durch ein Ansaugen der Faltenbälge beim Abkühlen der Bremse, z.B. durch einen Außentemperaturwechsel, beeinflusst werden. Eine Behinderung des Faltvorgangs, wie zum Stand der Technik beschrieben, ist ausgeschlossen.

Dies gilt gleichermaßen für die Gefahr einer Beschädigung der Faltenbälge durch Kontakt mit benachbarten heißen Bauteilen bzw. aus einer durch das Aufblähen gegebenen mechanischen Belastung. Im Umkehrschluss wird durch die Erfindung eine größere Wärmebelastbarkeit der Faltenbälge möglich. Insgesamt ergibt sich eine durchaus bemerkenswerte Erhöhung der Standzeit der Faltenbälge.

Auch die zu schützenden Bauteile im Innern des Aufnahmeraums unterliegen nun nicht mehr der Gefahr einer Beschädigung wie sie durch defekte Faltenbälge gegeben wäre, so dass die Nutzungsdauer der Scheibenbremse insgesamt erhöht wird.

Nach einer vorteilhaften Ausbildung der Erfindung weist der üblicherweise aus Kunststoff hergestellte Deckel den Lüftungskanal vorzugsweise mit einem Druckausgleichselement auf, das mit einer luftdurchlässigen Membrane versehen ist, die für Wasser undurchlässig ist.

Diese Membrane, die im Übrigen an jeder geeigneten Stelle vorgesehen sein kann, kann den Lüftungskanal im Austrittsbereich zur Umgebung abdecken, der andererseits zum Aufnahmeraum hin offen ist, so dass hier ein ungehinderter Luftdurchlass und damit Druckausgleich gegeben ist.

Die Membrane kann in einer Aufnahme beispielsweise des Deckels positioniert und gehalten sein, beispielsweise durch einfache, vorzugsweise passgenaue Einlage oder mit der Aufnahme durch Verkleben oder mittels Ultraschall-Schweißung verbunden sein.

In jedem Fall sollte die Membrane zur Außenseite hin abgedeckt sein, so dass sie vor einer direkten Beaufschlagung mit Spritzwasser, vor allem aus Hochdruckreinigem, geschützt ist.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teilausschnitt einer erfindungsgemäßen Scheibenbrem- se in einer perspektivischen Rückansicht
- Figur 2: eine Einzelheit der Scheibenbremse in einer perspektivischen Draufsicht

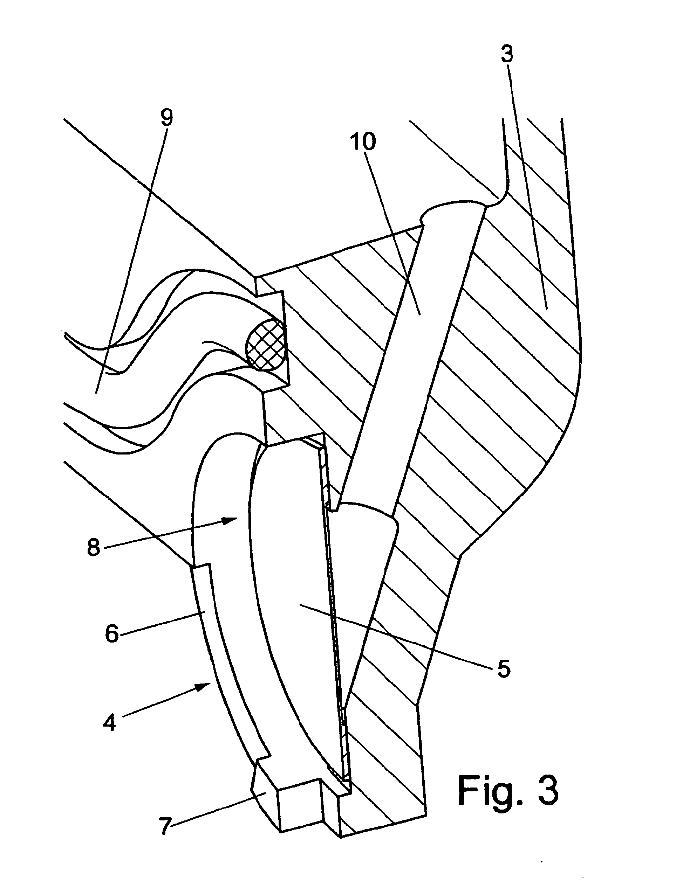

- Figur 3: einen Teilquerschnitt der Einzelheit nach Figur 2 entsprechend der Linie III-III in Figur 2.

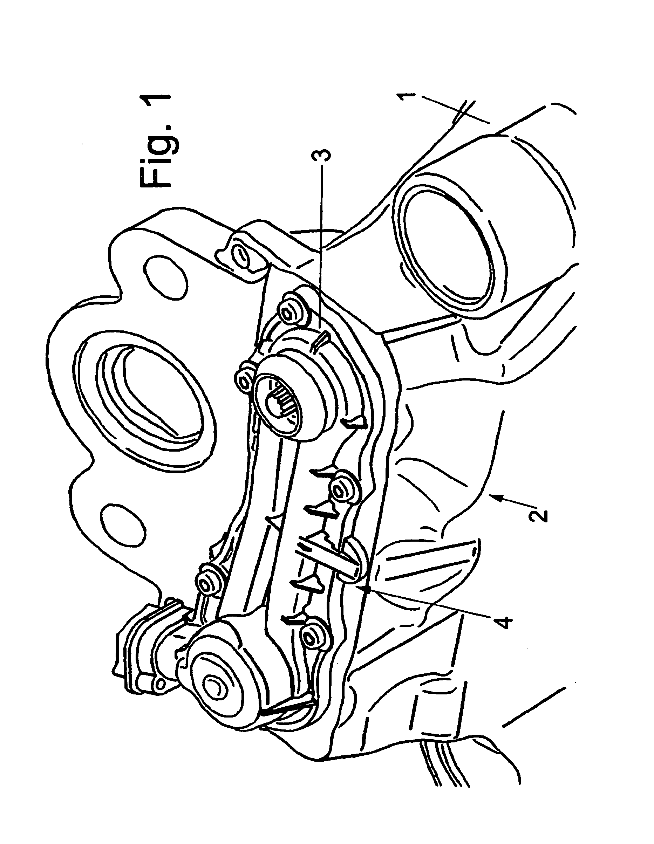

In der Figur 1 ist die Rückseite einer Scheibenbremse, insbesondere für Nutzfahrzeuge, dargestellt, die einen Bremssattel 1 aufweist, mit einem Aufnahmeraum 2, der funktionsrelevante Bauteile, wie eine nicht dargestellte Zuspanneinrichtung sowie damit betätigbare und gegen einen Bremsbelag drückbare Stellspindeln aufweist.

Dieser Aufnahmeraum 2 ist durch einen Deckel 3 verschlossen, der in seinem Innern gleichfalls nicht dargestellte Transmissionselemente einer Nachstelleinrichtung beherbergt, über die durch Drehung der angeschlossenen Stellspindeln ein Lüftspiel einstellbar ist.

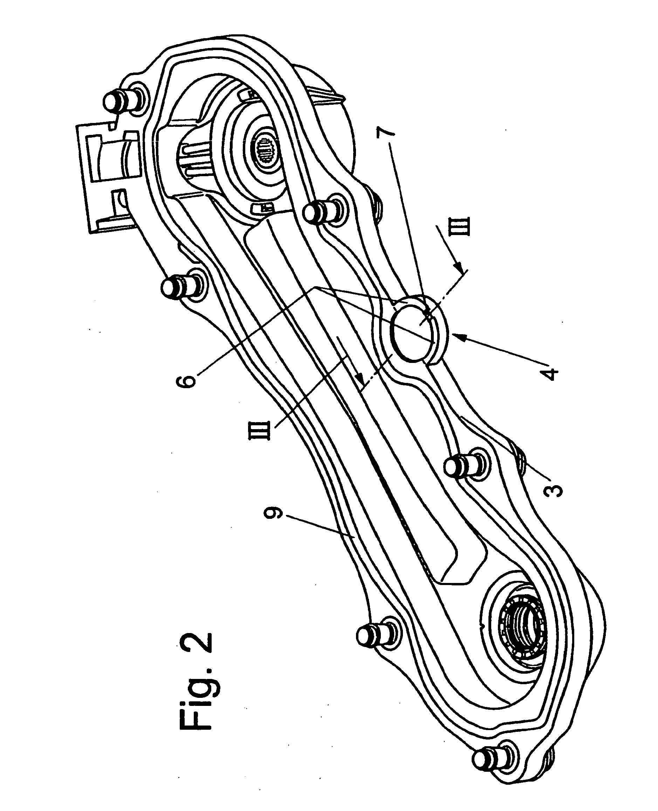

Wie insbesondere die Figur 2 sehr deutlich zeigt, ist der Deckel 3 gegenüber dem Bremssattel 1 durch eine im Deckel 3 einliegende, umlaufende Dichtschnur 9 luftdicht abgedichtet. Im Übrigen ist in der Figur 2, die den Deckel 3 als Einzelheit wiedergibt, der die Transmissionselemente aufnehmende Innenraum des Deckels 3 erkennbar.

Um einen Druckausgleich zwischen dem Aufnahmeraum 2 und der Umgebung zu erhalten, ist der Deckel 3 erfindungsgemäß mit einem spritzwassergeschützten Luftdurchlass 4 versehen.

Hierzu ist auf der Anlageseite des Deckels 3, die auch die Dichtschnur 9 aufnimmt, eine Aufnahme 8 vorgesehen, in der eine Membrane 5 gelagert ist.

Diese Membrane 5 deckt die Austrittsöffnung eines Lüftungskanals 10 ab, der andererseits in den Innenraum des Deckels 3 mündet, so dass eine Verbindung zwischen dem Innenraum des Deckels 3 und der Umgebung hergestellt ist, wobei die Membrane 5 natürlich luftdurchlässig sein muss.

Zur Gewährleistung des Druckausgleichs ist die Aufnahme 8 im Anlagebereich mit dem Bremssattel 1 mit Aussparungen 6 versehen, während eine Auflagefläche 7, sozusagen als Restfläche, planeben mit der übrigen Anlagefläche des Deckels 3 verläuft und am Bremssattel 1 anliegt.

Wie insbesondere die Figur 1 sehr deutlich wiedergibt, ist der Luftdurchlass 4 außenseitig vollständig überdeckt, mit Ausnahme der genannten, einen Ringspalt bildenden Aussparungen 6.

In jedem Fall ist der Luftdurchlass 4 spritzwassergeschützt und die Membrane 5 bevorzugt so ausgebildet, dass keine Luftfeuchtigkeit über den Lüftungskanal 10 in das Innere des Aufnahmeraums gelangen kann.

## Patentansprüche

1. Scheibenbremse, mit einem Deckel (3), der rückseitig einen Aufnahmeraum (2) eines Bremssattels (1) verschließt, in dem zwei in Funktion gegen eine Bremsscheibe pressbare Bremsbeläge angeordnet sind, von denen ein aktionsseitiger über mindestens eine Stellspindel mittels einer Zuspanneinrichtung betätigbar ist, wobei die Stellspindel durch eine einen Aufnahmeraum (2) des Bremssattels (1) zur Bremsscheibe hin verschließende Verschlussplatte geführt ist, an der zur Abdichtung ein andererseits an der Stellspindel befestigter Faltenbalg angeschlossen ist, **dadurch gekennzeichnet, dass** der Aufnahmeraum (2) einen spritzwassergeschützten, durch einen Lüftungskanal (10) gebildeten Luftdurchlass (4) zur Atmosphäre aufweist.

2. Scheibenbremse nach Anspruch 1, **dadurch gekennzeichnet, dass** der Lüftungskanal (10) im Deckel (3) vorgesehen ist.

3. Scheibenbremse nach Anspruch 1 oder 2, **dadurch gekennzeichnet, dass** der Lüftungskanal (10) einseitig durch eine luftdurchlässige Membrane (5) verschlossen ist.

4. Scheibenbremse nach einem der vorhergehenden Ansprüche, **dadurch gekennzeichnet, dass** die Membrane (5) feuchtigkeitsundurchlässig ist.

5. Scheibenbremse nach einem der vorhergehenden Ansprüche, **dadurch gekennzeichnet, dass** die Membrane (5) in einer Aufnahme (8) einliegt.

6. Scheibenbremse nach einem der vorhergehenden Ansprüche, **dadurch gekennzeichnet, dass** die Membrane (5) in der Aufnahme (8) form- oder stoffschlüssig gehalten ist.

7. Scheibenbremse nach einem der vorhergehenden Ansprüche 5 oder 6, **dadurch gekennzeichnet, dass** die Aufnahme (8) auf der dem Aufnahmeraum (2) des Bremssattels (1) zugewandten Seite des Deckels (3) vorgesehen ist.

8. Scheibenbremse nach einem der vorhergehenden Ansprüche, **dadurch gekennzeichnet, dass** die Aufnahme (8) rückseitig vom Deckel (3) im Übrigen überdeckt ist.

9. Scheibenbremse nach einem der vorhergehenden Ansprüche, **dadurch gekennzeichnet, dass** die Aufnahme (8) eine durch Aussparungen (6) unterbrochene Auflagefläche (7) aufweist, die mit einer Auflagefläche des Deckels (3) planeben verläuft, die luftdicht am Bremssattel anliegt.

10. Scheibenbremse nach Anspruch 9, **dadurch gekennzeichnet, dass** die Aussparungen (6) jeweils einen Ringspalt bilden.

## Claims

1. A disc brake, with a cover (3) which on the rear side closes a receiving space (2) of a brake calliper (1), in which space two brake linings which in operation can be pressed against a brake disc are arranged, of which one, on the action side, can be actuated via at least one setting spindle by means of a brake application means, the setting spindle being guided through a closure plate which closes a receiving space (2) of the brake calliper (1) towards the brake disc, to which plate a bellows which is fastened on the other hand to the setting spindle is connected for sealing purposes, **characterised in that** the receiving space (2) has a splash-protected air passage (4) to the atmosphere which is formed by a venting duct (10).

2. A disc brake according to Claim 1, **characterised in that** the venting duct (10) is provided in the cover (3).

3. A disc brake according to Claim 1 or 2, **characterised in that** the venting duct (10) is closed on one side by an air-permeable membrane (5).

4. A disc brake according to one of the preceding claims, **characterised in that** the membrane (5) is impermeable to moisture.

5. A disc brake according to one of the preceding claims, **characterised in that** the membrane (5) lies in a receptacle (8).

6. A disc brake according to one of the preceding claims, **characterised in that** the membrane (5) is held in the receptacle (8) in a positive lock or in a material lock.

7. A disc brake according to one of the preceding claims 5 or 6, **characterised in that** the receptacle (8) is provided on the side of the cover (3) facing the receiving space (2) of the brake calliper (1).

8. A disc brake according to one of the preceding claims, **characterised in that** the receptacle (8) is furthermore covered on the rear side by the cover (3).

9. A disc brake according to one of the preceding claims, **characterised in that** the receptacle (8) has a contact surface (7) which is interrupted by cutouts (6), which surface extends level with a contact surface of the cover (3) which lies in airtight manner against the brake calliper.

10. A disc brake according to Claim 9, **characterised in that** the cutouts (6) in each case form an annular gap.

## Revendications

1. Frein à disque comprenant un couvercle (3), qui ferme, du côté arrière, un espace de réception (2) d'un étrier de frein (1), dans lequel deux garnitures de frein sont disposées, qu'on peut presser en service contre un disque de frein et dont une, du côté d'action, est commandable via au moins une broche de réglage moyennant un dispositif applicateur du frein, à ladite broche de réglage étant passée à travers d'une plaque obturatrice, qui ferme un espace de réception (2) dudit étrier de frein (1) vers ledit disque de frein, auquel se joigne un soufflet fixée, d'autre coté, à ladite broche de réglage afin d'assurer l'étanchéité, **caractérisé en ce que** ledit espace de réception (2) comprend un passage d'air (4) vers l'atmosphère, qui est protégé contre les projections d'eau et est constitué par une canalisation de ventilation(10).

2. Frein à disque selon la revendication 1, **caractérisé en ce que** ladite canalisation de ventilation (10) est pourvue dans ledit couvercle (3).

3. Frein à disque selon la revendication 1 ou 2, **caractérisé en ce que** ladite canalisation de ventilation (10) est fermée d'un côté par une membrane perméable à l'air (5).

4. Frein à disque selon une quelconque des revendications précédentes, **caractérisé en ce que** ladite membrane (5) est imperméable à l'humidité.

5. Frein à disque selon une quelconque des revendications précédentes, **caractérisé en ce que** ladite membrane (5) est logée dans un récepteur (8).

6. Frein à disque selon une quelconque des revendications précédentes, **caractérisé en ce que** ladite membrane (5) est retenue dans ledit récepteur (8) à engagement positif ou par matière.

7. Frein à disque selon une quelconque des revendications précédentes, **caractérisé en ce que** ledit récepteur (8) est formé du côté dudit couvercle (3), qui se trouve en face dudit espace de réception (2) dudit étrier de frein (1).

8. Frein à disque selon une quelconque des revendications précédentes, **caractérisé en ce que** ledit récepteur (8) est chevauché dans la partie restante du côté arrière par ledit couvercle (3).

9. Frein à disque selon une quelconque des revendications précédentes, **caractérisé en ce que** ledit récepteur (8) présente une aire d'appui (7), qui est interrompue par des évidements (6) et qui s'étend au même niveau de manière planaire relativement à une aire d'appui dudit couvercle (3), en portant audit étrier de frein d'une façon étanche à l'air.

10. Frein à disque selon la revendication 9, **caractérisé en ce que** chacun desdits évidements (6) constitue un interstice annulaire.
